# EUROPEAN PATENT APPLICATION

(11) **EP 3 328 111 A1**
(43) Date of publication of application: **30.05.2018**
(21) Application number: 18150667.6
(22) Date of filing: 19.08.2014
(51) Int. Cl.: H04W 16/10, H04W 72/04

(54) **INTERFERENCE COORDINATION IN DENSE SMALL CELLS**

(30) Priority: 05.09.2013 US 201361874271 P
(62) Divisional of application: 14842525.9
(71) Applicant: ZTE (USA) INC., Richardson, TX 75080 (US)
(72) Inventor: WU, Huaming, San Diego, CA 92127 (US)
(74) Representative: Awapatent AB

(57) **Abstract**

A method of reducing interference between different cells in a densely populated cell network at an ABS allocation controller comprising sending an interference estimation request to at least one of a plurality of cells communicatively coupled with the ABS controller to report estimated interference from its neighboring one or more cells, receiving an interference estimation response from the one or more cells of the plurality of cells, receiving traffic load information from each cell communicatively coupled with the ABS controller, analyzing all the received interference estimates and traffic load information to determine almost blank subframe allocation at one or more interfering cells of the plurality of cells, and sending an ABS allocation command to one or more interfering cells of the plurality of cells.

## Description

### TECHNICAL FIELD

The present invention relates to methods of interference management in a heterogeneous network (HetNet) system with densely deployed small cells, and in particular, exchanging information of subframe utilization between enhanced Node B's (eNBs) for interference coordination of user equipments.

### BACKGROUND

A traditional high power base station can create a relatively large area of coverage that can be referred to as a macro cell. Several different types of low power nodes (LPN) have been developed that have a smaller area of coverage than a macro cell and that are intended to improve the quality and reliability of the service UE received in this area. These low power base station nodes include remote radio heads, pico eNBs, home eNBs (HeNBs), and similar components. The term eNB, in LTE networks, refers to an "evolved Node B" which is based off of the concept of a "Node B," an element of a 3G UMTS cellular network. A radio access base station that creates a macro cell might be referred to herein as a macro eNB. The area of coverage created by a low power base station might be referred to as a pico cell, a fcmto cell, a hotzone cell, a small cell, or a similar term. To be general, the term small cell is used herein to refer the coverage created by those LPNs. The term low power node or small cell eNB is used interchangeably herein.

Heterogeneous networks are one of many features in LTE Advanced (LTE-A). Heterogeneous network deployments consist of deployments where low power nodes are placed throughout a macro-cell layout. However, it's also possible to deploy standalone low power nodes without macro base stations. Heterogeneous network deployments are being increasingly utilized to address the limitations of traditional homogeneous network deployments, particularly the occurrence of blind spots in coverage or limited network capacity. Employing a HetNet system can provide coverage in indoor areas such as shopping malls or subways, which would receive little or no cellular coverage in a traditional homogeneous macro cell network.

One difference between low power nodes and macro eNBs is the transmit power. For example, the maximum allowable transmit power of a macro eNB is typically 46 dBm, a remote radio head/pico is typically 30dBm, and a HeNB is typically 20 dBm, for a 10 MHz carrier bandwidth. Another difference between low power nodes is the connection to the core network (i.e. backhaul) and the connection to neighbor cells. For example, a pico cell is a small cellular base station with a dedicated backhaul connection to the service provider's core network (e.g, through S1 interface in 3GPP) and other pico/macro cells (e.g., through X2 interface in 3GPP). A femto cell, on the other hand, is a small cellular base station, typically designed for use in a home or small business. It connects to the service provider's network via broadband (such as DSL or cable). Typically, the HeNB has no direct interface (e.g, X2 interface in 3GPP) to other femto cells or any Macro eNodeB (MeNB).

Although HetNet offers opportunities to enable large-scale, low-cost deployment of small base stations below rooftops to improve user experience at hotspots or to improve the network coverage, it introduces new challenges to inter-cell interference coordination within the same channel as well as load balancing and user mobility in idle and active mode.

### SUMMARY

In accordance with some implementations, a method of reducing interference between different cells in a densely populated cell network at an ABS allocation controller includes sending an interference estimation request to at least one of a plurality of cells communicatively coupled with the ABS controller to report estimated interference from its neighboring one or more cells. The ABS controller receives an interference estimation response from the one or more cells of the plurality of cells. The ABS controller receives traffic load information from each cell communicatively coupled with the ABS controller. The ABS controller analyzes all the received interference estimates and traffic load information to determine almost blank subframe allocation at one or more interfering cells of the plurality of cells, and sends an ABS allocation command to one or more interfering cells of the plurality of cells.

In accordance with some implementations, a method of managing communication interference in a heterogeneous network includes an interfered cell receiving information from one or more user equipments reporting interference from at least two other cells.
In some embodiments, in response to receiving the interference reports, the interfered cell transmits to the two or more interfering cells that there is interference being experienced by user equipments of the interfered cell. A first of the two or more interfering cells determines a first set of one or more data structures, each representing an almost blank subframe pattern of downlink subframes available for the interfered cell to schedule its user equipments, based on the interference information reported by the interfered cell. A second of the two or more interfering cells determines a second set of one or more data structures, each representing an almost blank subframe pattern of downlink subframes available for the interfered cell to schedule its user equipments, based on the interference information reported by the interfered cell. The interfered cell receives from the first interfering cell, the first set of one or more data structures, and receives from the second interfering cell the second set of one or more data structures. The interfered cell compares the almost blank subframe patterns of the first set and second set and selects at least one of the first set of almost blank subframe patterns and selects at least one of the second set of almost blank subframe patterns. The interfered cell transmits to the first interfering cell the selection from the first set of almost blank subframe patterns and transmits to the second interfering cell the selection from the second set of almost blank subframe patterns, and the interfered cell schedules downlink subframes for user equipments of the interfered cell, in accordance with the selected ABS patterns.

In accordance with some implementations, a method of managing communication interference in a heterogeneous network includes a first of two or more interfering cells determining a first set of one or more almost blank subframe patterns of downlink subframes available for an interfered cell to schedule its user equipments. A second of the two or more interfering cells, also determines a second set of one or more almost blank subframe patterns of downlink subframes available for the interfered cell to schedule its user equipments. The interfered cell receives from the first interfering cell, the first set of one or more data structures, each representing an almost blank subframe pattern, and receives from the second interfering cell the second set of one or more data structures, each representing an almost blank subframe pattern. The interfered cell compares the almost blank subframe patterns of the first set and second set and selects at least one of the first set of almost blank subframe patterns and selects at least one of the second set of almost blank subframe patterns in accordance with interference reports from one or more user equipments that communicate with the interfered cell. The interfered cell transmits to the first interfering cell the selection from the first set of almost blank subframe patterns and transmits to the second interfering cell the selection from the second set of almost blank subframe patterns; and the interfered cell schedules downlink subframes for user equipments of the interfered cell, in accordance with the selected ABS patterns.

### BRIEF DESCRIPTION OF DRAWINGS

The accompanying drawings, which are included to provide a further understanding of the invention and are incorporated herein and constitute a part of the specification, illustrate embodiments of the invention and together with the description serve to explain the principles of the invention. Like reference numerals refer to corresponding parts throughout the several views of the drawings.
FIGS. 1A and 1B depict, respectively, the network architecture of LTE Advanced (LTE-A) and the interference between a macro eNB and a pico eNB.
FIGS. 2A and 2B depict, respectively, the structure of a radio frame in the time domain and an almost blank subframe (ABS) pattern info bitmap.
FIG. 3 depicts an exemplary representation of the network architecture of LTE Advanced (LTE-A) and the interference between a macro eNB, a pico eNB and a femto eNB.
FIG. 4 depicts an exemplary representation of a network of cells using centralized ABS allocation control.
FIGS. 5A and 5B depict, respectively, an exemplary implementation of an ABS allocation controller communicating with one or more eNB's, and an exemplary data structure representing an interference estimation request.
FIGS. 6A and 6B depict, respectively, an exemplary data structure representing an interference estimation response, and an exemplary data structure representing an ABS allocation command.
FIG. 7 depicts an exemplary representation of a network of cells using distributed ABS allocation control.
FIG. 8A depicts an exemplary representation of an ABS pattern negotiation in a distributed ABS allocation control scheme.
FIGS. 8B to 8E depict exemplary data structures containing ABS patterns communicated between a victim cell and two aggressor cells.
FIG. 9 is a flowchart illustrating an exemplary operation of an ABS allocation controller in a centralized ABS allocation scheme.
FIG. 10 is a flowchart illustrating one exemplary operation of ABS allocation in a distributed ABS allocation scheme.

### DETAILED DESCRIPTION

Reference will now be made in detail to embodiments, examples of which are illustrated in the accompanying drawings. In the following detailed description, numerous non-limiting specific details are set forth in order to assist in understanding the subject matter presented herein. It will be apparent, however, to one of ordinary skill in the art that various alternatives may be used without departing from the scope of the present invention and the subject matter may be practiced without these specific details. For example, it will be apparent to one of ordinary skill in the art that the subject matter presented herein can be implemented on many types of radio communication systems.

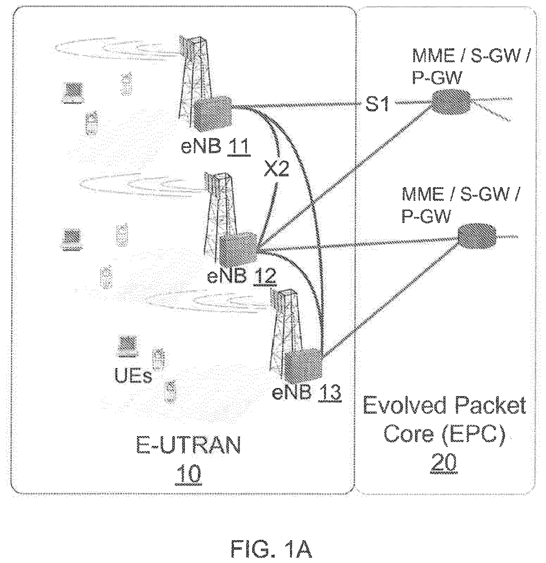

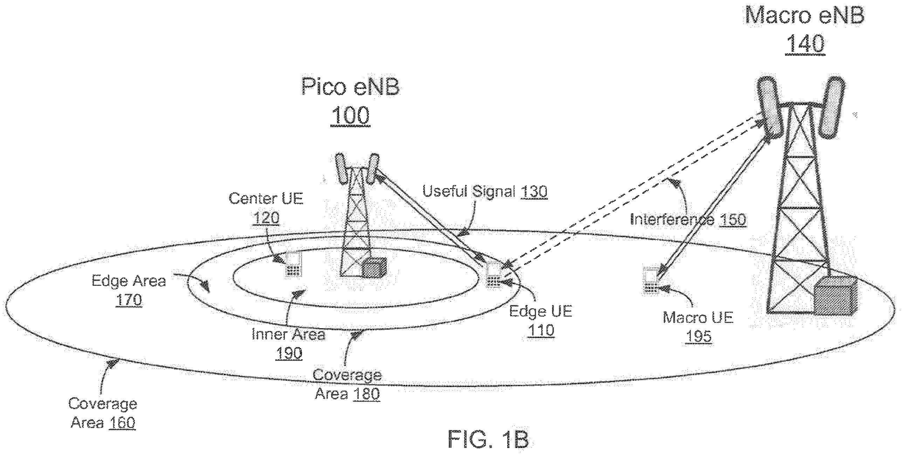

FIGS. 1A and 1B depict, respectively, the network architecture of LTE Advanced and the interference between a macro eNB and a pico eNB. FIG. 1A depicts that E-UTRAN 10, which stands for "Evolved UMTS Terrestrial Radio Access Network", is the air interface of 3GPP's Long Term Evolution Advanced (LTE-A). The E-UTRAN 10 consists of a plurality of eNBs (11, 12, 13) on the network side, each eNB having a specific coverage area and responsible for scheduling one or more User Equipments (UEs) in the coverage area. The eNBs are connected to each other via the X2 interface, and they connect to the Evolved Packet Core 20 (EPC) network via the S1 interface.

A typical high power node, which has a maximum allowable transmit power of 46 dBm for a 10 MHz carrier bandwidth, can create a relatively large coverage area. Several types of low power nodes (LPN), which have a smaller coverage area than the high power node but may improve the quality and reliability of the coverage provided by the high power node, have been introduced into the large coverage area. These low power nodes include remote radio heads, pico eNBs, home eNBs (HeNBs), and the like. The maximum allowable transmit power of a remote radio head/pico eNB or a HeNB is typically 30 dBm or 20 dBm for a 10 MHz carrier bandwidth. In the present application, terms like "high power cell," "high power node," "macro cell," and "micro eNB" are used interchangeably. As such, the coverage area of a low power node is referred to as a pico eNB (or cell), a femto eNB (or cell), a hotzone eNB (or cell), a low power eNB (or cell), or the like, any of which might be used interchangeably herein.

Besides the different transmit powers, these low power nodes have different connections to the core network (*i.e.,* the EPC 20) and to their neighboring cells. For example, a pico cell is a small cellular base station with a dedicated backhaul connection to the service provider's core network (e.g., through S1 interface in 3GPP) and other pico/macro cells (e.g., through X2 interface in 3GPP). A femto cell is also a small cellular base station designed for use at a home or small business. The femto cell connects to the service provider's network via broadband internet (such as DSL or cable). The HeNB may have no direct interface to other femto cells or any macro cell.

When high power nodes and low power nodes are deployed in the same data/control channel, there may be interference problems for high power and low power cell User Equipments (UEs). For illustrative purposes, FIG. 1B depicts one pico eNB 100 and one macro eNB 140. The macro eNB 140 has a large coverage area 160 and the pico eNB 100 has a small coverage area 180, which is inside the coverage area 160. The small coverage area 180 is divided into an inner area 190 and an edge area 170. If a UE (e.g., the center UE 120) is located within the inner area 190, the user equipment is more likely connected to the pico eNB 100 and not affected by other neighboring cells including the macro eNB 140. In contrast, a UE (e.g., the edge UE 110) located in the edge area 170 may receive both useful signal 130 from the pico eNB 100 and strong interference 150 from the macro eNB 140 such that the latter may affect the quality of the useful signal received by the edge UE 110. Alternatively, when a macro cell UE (e.g., the macro UE 195) moves close to the pico eNB 100, the signal from the pico eNB 100 may also cause interference to the signal the macro cell UE receives from the macro eNB 140. In both cases, the interference may be so strong that the affected UE cannot maintain a normal service from its serving cell. Note that in the present application, terms like "aggressor cell" and "interfering cell" are used interchangeably herein and terms like "victim cell" and "interfered cell" are also used interchangeably herein.

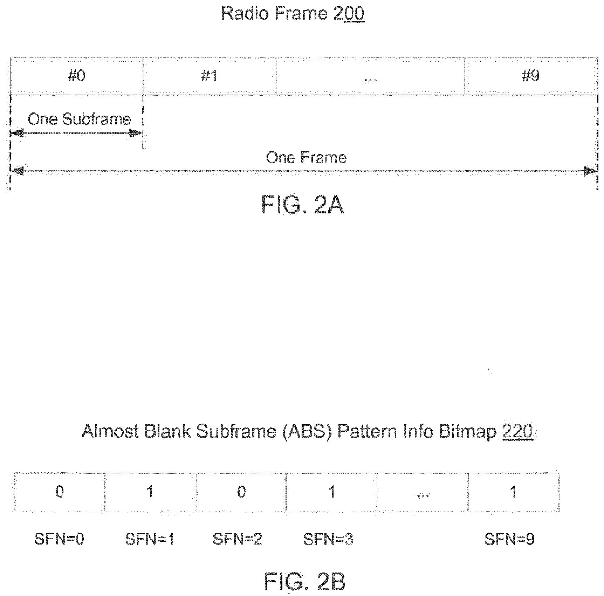

One method of solving this inter-cell interference problem is to use the so-called "Almost Blank Subframe" (ABS) at the interfering cell and inform the victim cell of this ABS configuration. The basic unit of downlink transmission in 3GPP-LTE is a downlink subframe. The eNB of the victim cell then schedules downlinks for its UEs during the subframes defined by the ABS of other interfering cell(s). FIG. 2A depicts an exemplary 10-ms radio frame 200, which is divided into ten l-ms subframes. As shown in FIG. 2B, the data structure for storing the ABS configuration has the same number of bits as the number of subframes in a radio frame. In this example, a binary value "0" corresponds to the subframes that have an even index (SFN=0, 2, 4, 6, 8) and a binary value "1" corresponds to the subframe that have an odd index (SFN=1, 3, 5, 7, 9). In this example, the usable ABS Pattern Info 220 is defined as a bitmap, each position in the bitmap representing a corresponding downlink subframe. In particular, a binary value "1" corresponds to a subframe that has been designated as being protected from inter-cell interference from the aggressor cell, and is therefore available to be used by the victim cell for downlink scheduling. A binary value "0" is used for identifying other subframes that have been reserved by the aggressor cell for its own use.

In short, the ABS Pattern Info 220 identifies the subframes designated as almost blank subframes by the sending eNB (typically, of the aggressor cell) for the purpose of interference coordination. The receiving eNB (typically, of the victim cell) may consider such information when scheduling its own serving UEs. In some implementations, the aggressor cell also sends a request for feedback to the victim cell in order to know the victim cell's used ABS pattern and evaluate the need for modification of the ABS Pattern Info 220. The victim cell's pattern represented by the bitmap is a subset of, or the same as, the corresponding "ABS Pattern Info" message from the aggressor cell.

In this example, the aggressor cell periodically mutes the transmission that inflicts interference onto other victim cells for each designated subframe defined in the ABS Pattern Info message, so that the victim cells have a chance to serve their own UEs otherwise suffering the interference from the aggressor cell in these subframes. In some implementations, this muting is incomplete. Certain signals such as the common reference symbols, the primary and secondary synchronization signals (PSS and SSS), the physical broadcast channel (PBCH), and the system information block (SIB) and paging with their associated PDCCH, have to be transmitted even in the otherwise muted subframes, e.g., to avoid radio link failure or for reasons of backwards compatibility. Such muted subframes are thus referred to as almost blank subframes (ABS). In some implementations, the time domain muting (TDM) patterns are configured semi-statically and exchanged between different eNBs over the X2 interface.

As shown in FIG. 1B, the UEs in the vicinity of a victim cell are categorized into two groups:
(i) UEs that are exposed to severe interference from another cell using TDM muting and hence should be scheduled in subframes muted by the corresponding aggressor cell (e.g., the edge UE 110 in FIG. 1B).
(ii) UEs that are indifferent to the interference from another eNB using the TDM muting (e.g., the center UE 120 and the macro UE 195 in FIG. 1B).

In reality, a victim cell is often the victim of interference from more than one interfering cell, especially in a densely deployed network. In such case, the above mentioned concept of a victim cell coordinating its downlink subframes for one or more UEs based on the ABS information received from one interfering cell may still result in interrupted service for the UE due to interference from one or more other interfering cells.

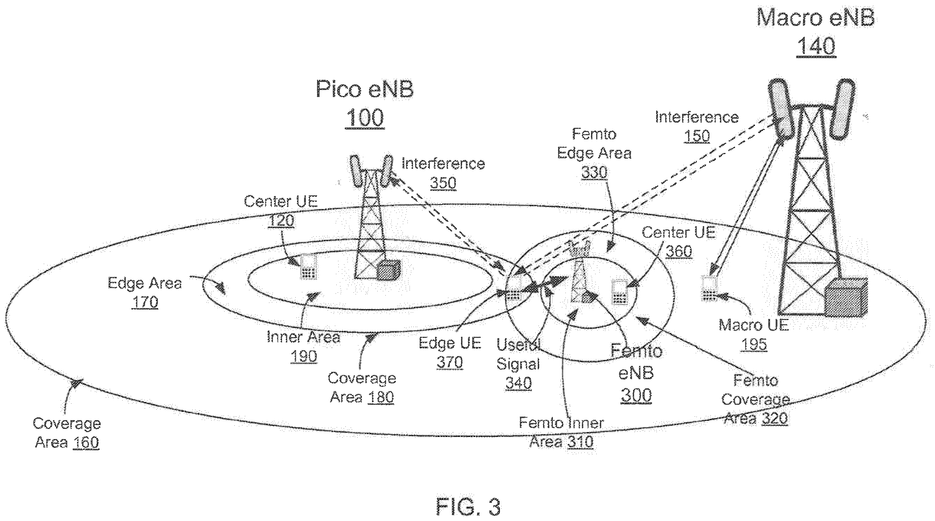

To illustrate this problem, FIG. 3 depicts an exemplary representation of the network architecture of LTE Advanced (LTE-A) and the interference between a macro eNB 140, a pico eNB 100 and a femto eNB 300. In this case, edge UE 370 is located in a zone with overlapping coverage from all three eNBs. Like the coverage area for pico eNB 100, the coverage area 320 of femto eNB 300 can be described as having an inner area 310 and an edge area 330. If a UE is located within the femto inner area 300, such as a device being operated by a user at his home, the UE is more likely connected to the femto eNB 300 and not affected by other cells, including macro eNB 140 and pico eNB 100. Center UE 360 is an example of a UE located in femto inner area 310.

In contrast, a UE (e.g., the edge UE 370) located in the edge area 170 of pico eNB 100 and edge area 330 of femto eNB 300, may receive useful signal 340 from femto eNB 300 and strong interference 350 from pico eNB 100 and strong interference 150 from macro eNB 140 that may affect the quality of the useful signal 340. Similarly, when macro cell UE 195 moves close to the femto eNB 300, the signal from the femto eNB 300 may also cause interference to the signal the macro cell UE 195 receives from the macro eNB 140. If macro cell UE 195 moves into an area where pico edge area 170 and femto edge area 330 overlap, both pico eNB 100 and femto eNB 300 may cause interference to the signal macro UE 195 receives from macro eNB 140. In both cases, the interference may be so strong that the affected UE cannot maintain a normal service from its serving cell. Figure 3 is an exemplary representation involving a macro cell, pico cell and femto cell, but the same interference model can be depicted with any combination of high and low power nodes, and more than two interfering cells.

In current 3GPP LTE specifications, the traffic load in terms of physical resource block (PRB) utilization may be exchanged on the X2 interface among cells. This PRB utilization information reveals the resource usage in frequency domain and may approximately represent the average traffic load for a cell. In current 3GPP LTE specifications, there is a Relative Narrow Band Transmit Power (RNTP) message exchanged on the X2 interface among cells. However, such RNTP information only reveals the relative download transmit power in frequency domain from an interfering cell to a victim cell. It does not represent the actual interference over time domain. ABS pattern allocation is a time-domain based methodology for inter-cell coordination in LTE-A.

Due to the potential for interference from more than one cell in a dense cellular network, a solution is required to allow for interference-free communication of user equipments. The above mentioned concept of "ABS Pattern Info" is designed for the case of a single aggressor cell and a single victim cell. Such a system is much simpler to design for managing interference, but it is insufficient to rely on single-aggressor to single-victim ABS communication in a dense cellular network with multiple aggressor cells to one victim cell. In such a network, while one interfering cell may provide almost blank subframes for the victim cell to schedule its user equipments, if a second aggressor cell is still transmitting in those almost blank subframes of the first aggressor cell, edge user equipments of the victim cell will still experience interference.

### Centralized ABS Allocation

One solution is to employ a centralized ABS allocation scheme, where an ABS controller, communicatively coupled to a plurality of cells, can receive information regarding traffic loads and interference from any and every cell of the plurality of cells, and send appropriate ABS allocation commands to aggressor cells. The ABS controller would balance the competing interests of victim cells that wish to allocate subframes for their user equipments, and aggressor cells that may have high traffic loads and an inability to give up subframes. Cells are not restricted to any particular type, and therefore can be macro cells or small cells in this centralized ABS allocation scheme.

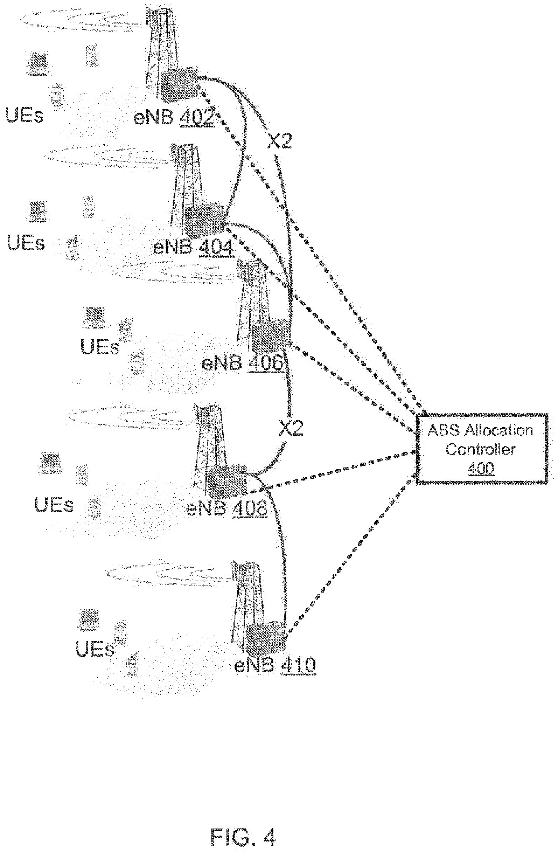

Figure 4 depicts an exemplary representation of a network using centralized ABS allocation control. In Figure 4, an ABS allocation controller 400 is communicatively coupled with several cells, represented by eNB 402, eNB 404, eNB 406, eNB 408 and eNB 410. In some embodiments, the ABS allocation controller 400 is a distinct physical entity, or connected to a cell, or implemented in the network gateway. For example, this function may be implemented in the existing network entities such as the cluster head of a group of small cells or by the macro base station whose coverage may overlap with that of a group of small cells. The ABS allocation controller 400 makes decisions about ABS allocation for all the eNBs under its control based on information such as the traffic load and interference level for some or all of the cells it is communicatively coupled with.

In order to effectively allocate almost blank subframes for one or many cells, the ABS allocation controller requests information about the traffic load for each cell it is communicatively coupled with and requests information regarding interference from aggressor cells to victim cells. In some embodiments, the ABS allocation controller 400 makes a periodic request for traffic load information and interference estimation information, and in some embodiments the ABS allocation controller 400 can be triggered to assess the interference management needs of the network by one or more of the cells it is communicatively coupled with.

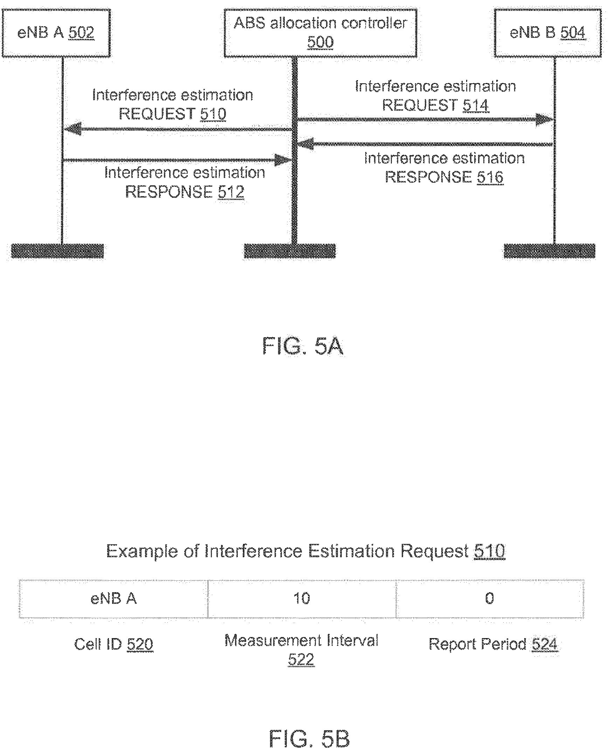

Figure 5A depicts an exemplary implementation of an ABS allocation controller 500 communicatively coupled with cells eNB A 502 and eNB B 504. In some embodiments, ABS allocation controller 500 periodically or upon request by a cell, sends an interference estimation request to one or more cells of the plurality of cells that ABS allocation controller 500 is communicatively coupled with. Figure 5A shows, for example, ABS allocation controller 500 sending an interference estimation request 510 to eNB A 502, and an interference estimation request 514 to eNB B 504. This request may be transmitted on the X2 interface. In some embodiments, ABS allocation controller 500 may employ some request logic that dictates a preference for which cells to sends interference estimation requests to, and a frequency for such requests. For example, if a particular cell of a plurality of cells faces interference much more often than other cells in the plurality of cells, the ABS allocation controller 500 may decide to request more frequent reports of that victim cell's interference estimates. In some embodiments, the ABS allocation controller 500 has adaptive logic to modify its own behavior in response to changes in the plurality of cells it is communicatively coupled to.

Figure 5B depicts an exemplary data structure representing an interference estimation request 510, also shown in Figure 5A going from the ABS allocation controller 500 to eNB A 502. Cell ID 520 is the cell ID of the target cell receiving this request message, and is eNB A 502 in this example. Measurement interval 522 is a time interval of interference estimation measurement requested by the ABS allocation controller 500. For example, the value could be defined as the number of subframes over which to make a measurement of the estimated interference value. Report period 524 is the period for the interference estimation report. For example, the value 0 could represent that the report is to be sent to the ABS allocation controller 500 once, while other values may represent a request for a periodic report.

In Figure 5A, eNB A 502 sends an interference estimation response 512 back to ABS allocation controller 500, in response to the interference estimation request 510. Similarly, eNB B 504 sends an interference estimation response 516 back to ABS allocation controller 500, in response to interference estimation request 514.

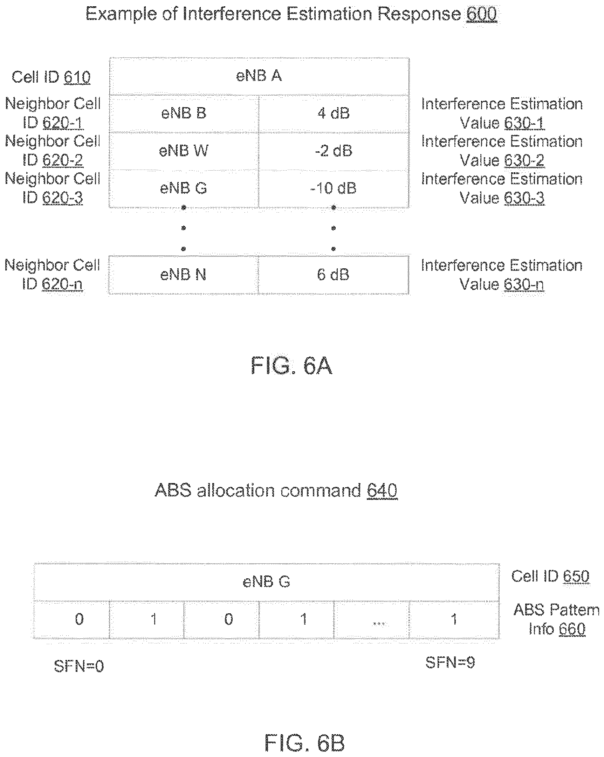

Figure 6A and Figure 6B depict, respectively, an exemplary data structure representing an interference estimation response 600, and an exemplary data structure representing an ABS allocation command 640. In Figure 6A, cell ID 610 represents the cell ID of the cell that is sending the interference estimation response 600 in response to an interference estimation request. This exemplary data structure also contains a list of neighboring cells depicted by neighbor cell ID 620, and the corresponding interference estimation value 630 for each of the neighbor cells around the cell represented by cell ID 610. In this example, eNB A 502 is reporting in interference estimation value 630-1, a signal-to-noise ratio of 4 dB with respect to eNB B, the cell identified in neighbor cell ID 620-1. It should be recognized that the format for identifying neighboring cells does not have to be alphanumeric, and the measurement of estimated interference does not have to be represented by a signal-to-noise ratio. For instance, the interference estimated value for a particular neighbor cell could be one from the set [<-10, -10, -8, -6, -4, -2, 0, 2, 4, 6, 8, 10, >10] (dB). In another example, the interference estimated value could be a binary value (e.g. "1" indicates the interference is higher than a predefined threshold). Such threshold may be predefined and stored in the cell or dynamically calculated at the cell. In some embodiments the responding cell may create the data structure representing the interference estimation response 600 by reporting the neighboring cells in decreasing or increasing order of interference values, or only return the interference values of neighboring cells that meet or exceed a predetermined threshold. In some embodiments the cell that received an interference estimation request from an ABS allocation controller does not send a response to the ABS allocation controller if it is not experiencing interference beyond a predetermined threshold. In some embodiments, the responding cell must send its interference estimation response 600 within a predetermined duration of time from the time the ABS allocation controller sent its corresponding interference estimation request.

After receiving the reported information of the interference estimates from the requested cell or cells, the ABS allocation controller analyzes the interference information and the traffic load information for the plurality of cells it is communicatively coupled with. In some embodiments all the cells communicatively coupled with the ABS controller report their traffic load, and all the cells report their estimate interference from neighboring cells. In some embodiments only a subset of cells report traffic load or interference estimates. The ABS allocation controller uses the information it receives, to determine an ABS allocation pattern for some or all of the interfering cells in the plurality of cells. In some embodiments, some of the interfering cells in the plurality of cells may also be victim cells. The ABS allocation controller is able to determine an efficient allocation of subframes among the various cells because it has a large scope of interference and traffic load information for the plurality of cells it is communicatively coupled with. The ABS allocation controller typically operates to minimize the number of UE's that experience interference in the coverage area of the plurality of cells communicatively coupled with the ABS allocation controller. The ABS allocation controller may use other factors beyond traffic load and interference estimates to govern its decision to allocate resources among the plurality of cells. The ABS allocation controller governs the allocation of almost blank subframes by sending one or more ABS allocation commands to one or more interfering cells.

Figure 6B depicts an exemplary data structure representing an ABS allocation command 640. Cell ID 650 represents the cell ID of the interfering cell to receive the ABS allocation command 640. In this example, eNB G is receiving this ABS allocation command 640. As can be seen in Figure 6A, eNB G, identified in field 620-3, created an interference value of -10 dB observed at cell eNB A. The exemplary ABS allocation command 640 also contains ABS pattern info 660. ABS pattern info 660 can take the format of currently deployed ABS pattern info, such as the bitmap format specified in 3GPP standard TS 36.423. If a cell receives an ABS allocation command message 640 from the ABS allocation controller, it may allocate ABS as indicated in the command and send the allocated ABS pattern info to its neighbor cells via X2 interface so that its neighbor cell eNBs can schedule accordingly. In some embodiments, the ABS allocation controller also sends a data structure to a victim cell indicating the almost blank subframes it can use to schedule its user equipments. This direct communication to a victim cell would have already taken into consideration the ABS pattern info 660 of one or more ABS allocation commands 640 sent to one or more interfering cells of the victim cell. In some embodiments the victim cell determines the subframes to use for scheduling its user equipments based solely on the ABS pattern info 660 received from each interfering neighboring cell.

### Distributed ABS allocation

Another solution to the problem of allocating almost blank subframes in a multiple aggressor cell network, is to employ a distributed ABS allocation scheme. In a distributed ABS allocation scheme there is no dedicated ABS controller, but rather a plurality of cells communicatively coupled to each other manage ABS allocation amongst themselves to minimize interference at user equipments. In contrast to the centralized ABS allocation scheme, in the distributed ABS allocation scheme there is no hierarchical relationship among the elements in the network, therefore each victim cell and each aggressor cell must negotiate ABS allocation. In some embodiments, victim cells may have to request ABS allocation from more than one neighboring aggressor cell, and aggressor cells may receive ABS allocation requests from more than one victim cell. As in the centralized ABS allocation scheme, some victim cells may also be aggressor cells, particularly in a very dense network. Cells are not restricted to any particular type, and therefore can be macro cells or small cells in this centralized ABS allocation scheme.

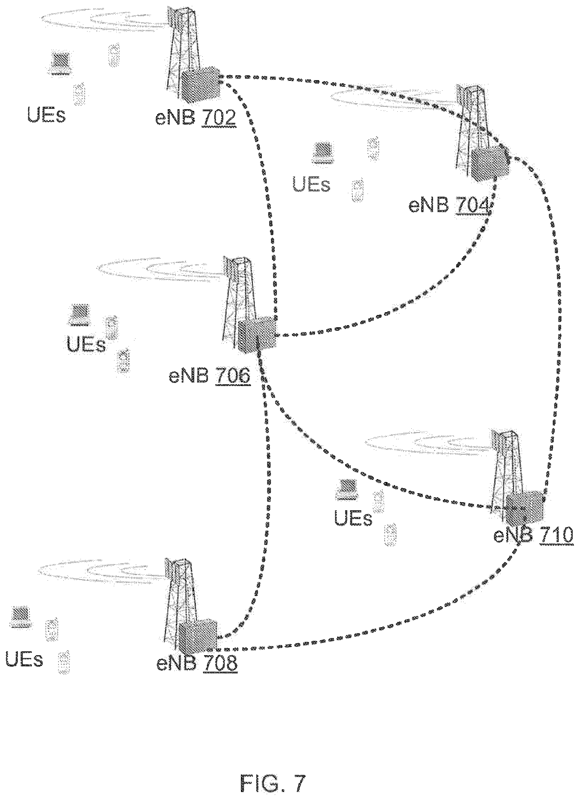

Figure 7 depicts an exemplary representation of a network of cells using distributed ABS allocation control. In Figure 7, the various cells 702, 704, 706, 708 and 710 are communicatively coupled with each other. In some embodiments the distributed ABS allocation scheme is operated among a limited number of cells within a predetermined geographical area. In some embodiments the distributed ABS allocation scheme is only deployed among a group of small cells, and in some embodiments at least one of the cells in the distributed ABS allocation scheme is a macro cell. In some embodiments all of the cells in the distributed ABS allocation scheme have a direct communication link with every other cell in the scheme. In some embodiments all of the cells in the distributed ABS allocation scheme arc restricted to a direct communication link with a subset of the cells in the scheme.

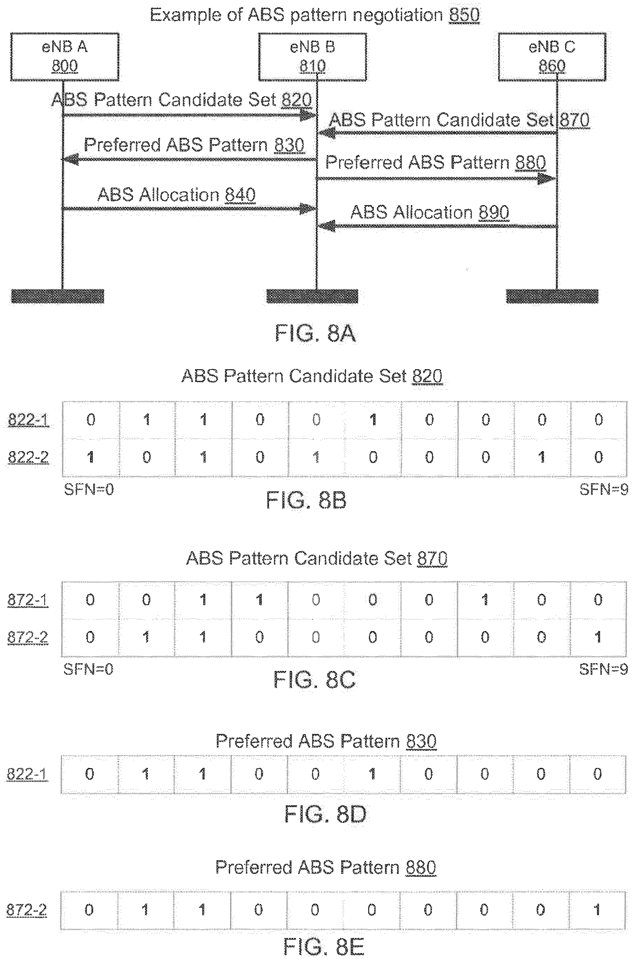

Figure 8A depicts an exemplary representation of an ABS pattern negotiation 850, between an aggressor cell eNB A 800, a victim cell eNB B 810 and another aggressor cell eNB C 860. In some embodiments, a victim cell receives reports of interference levels from one or more user equipments to determine that at least one neighboring cell is providing interference. The user equipments report signal levels from neighboring cells to the victim cell so the victim cell can determine which neighboring cells are aggressor cells. In this example, eNB B 810 determined that eNB A 800 and eNB C 860 are aggressor cells. In some embodiments, one or more aggressor cells in a network of cells using distributed ABS allocation control know the load information of neighboring victim cells.

Aggressor cells eNB A 800 and eNB C 860 respond to notification from eNB B 810 that it is experiencing interference in some portion of its cell coverage area. In some embodiments, victim cell eNB B 810 sends a notification to merely indicate the presence of interference. In some embodiments, the victim cell transmits actual interference reports received from the UE's to the aggressor cells, and in some embodiments the victim cell transmits some subset or interpretation of the information contained in the interference reports, such as the SNR of the victim cell signal and the aggressor cell signal. In response, eNB A 800 sends ABS pattern candidate set 820 to eNB B 810, and eNB C 860 sends ABS pattern candidate set 870 to eNB B 810. This demonstrates two distinctions from existing ABS allocation deployments. In the distributed ABS allocation scheme, one victim cell can receive and process ABS patterns sent from more than one aggressor cell. Another distinction is that aggressor cells can each send more than one candidate ABS pattern to the victim cell.

Figure 8B and Figure 8C depict exemplary representations of ABS pattern candidate sets 820 and 870 from Figure 8A. In ABS pattern candidate set 820, eNB A 800 sent a first pattern 822-1, and a second pattern 822-2 to eNB B 810. In ABS pattern candidate set 870, eNB C 860 sent a first pattern 872-1, and a second pattern 872-2 to eNB B 810. In some embodiments, an aggressor cell may send only one ABS pattern in its transmitted ABS pattern candidate set, or may send more than two ABS patterns. In some embodiments, an aggressor cell may send more than one ABS pattern to a victim cell in more than one transmission message, before receiving feedback from the victim cell. In some embodiments, an aggressor cell may not send an ABS pattern candidate set to the victim cell, if it docs not have any available subframes. In some embodiments, the aggressor cell only received notification of interference experienced by UE's of the victim cell, and generates the ABS pattern candidate set without consideration of any subset or interpretation of the interference reports. In some embodiments, the aggressor cell receives a subset or interpretation of information contained in the interference reports of the victim cell's UE's, and takes that information into consideration before generating the ABS pattern candidate set.

Figure 8A shows that victim cell eNB B 810 sends a preferred ABS pattern 830 back to aggressor cell eNB A 800, after selecting one ABS pattern from ABS pattern candidate set 820. Figure 8D shows the preferred ABS pattern 830 message sent from eNB B 810 to eNB A 800, containing pattern 822-1 from ABS pattern candidate set 820. Figure 8A shows that victim cell eNB B 810 sends a preferred ABS pattern 880 back to aggressor cell eNB C 860, after selecting one ABS pattern from ABS pattern candidate set 870. Figure 8E shows the preferred ABS pattern 880 message sent from eNB B 810 to eNB C 860, containing pattern 872-2 from ABS pattern candidate set 870. As can be seen from Figure 8D and Figure 8E, ABS patterns 822-1 and 872-2 have two almost blank subframes in common. Every other pairing between ABS patterns of the set {822-1, 822-2} and the set {872-1, 872-2} yield only one almost blank subframe in common.

In some embodiments, the victim cell can return more than one ABS pattern in the preferred ABS pattern message to an aggressor cell. In some embodiments an ABS pattern message with more than one ABS pattern is interpreted by the aggressor cell to indicate equal preference by the victim cell for all the returned ABS patterns. In some embodiments, the victim cell can return ABS patterns received from other aggressor cells, to a particular aggressor cell. In some embodiments, the victim cell can return some or all of the patterns from ABS pattern candidate set in a ranked order of preference. In some of these embodiments, the preferred ABS pattern message sent from a victim cell to an aggressor cell may require additional fields for additional information.

Figure 8A shows a message sent from eNB A 800 to eNB B 810, carrying the ABS allocation 840 implemented by eNB A 800. Similarly, eNB C 860 sends ABS allocation 890 to eNB B 810. ABS allocation reflects the actual ABS pattern implemented by an aggressor cell after the process of negotiation with a victim cell. An aggressor cell may take its own traffic load and ABS request from other victim cells into consideration before sending an ABS pattern candidate set, and may again take these factors into consideration after receiving the preferred ABS pattern message from a respective victim cell. In some embodiments an aggressor cell will not return an ABS allocation to a victim cell, or may wait a period of time until it can implement the ABS pattern or patterns preferred by the victim cell. In some embodiments ABS allocation may consist of an ABS pattern containing a '0' for each subframe to indicate that the aggressor cell cannot provide any almost blank subframes.

In some embodiments, the victim cell will receive ABS allocation messages from all of its corresponding aggressor cells, providing at least one common almost blank subframe. Upon receiving these ABS allocation messages, the victim cell can schedule its user equipments in those almost blank subframes. In some embodiments the victim cell can return information to some or all of its aggressor cells regarding the actual subframes utilized by the victim cell for its user equipments. This feedback could provide the aggressor cells with more information and may free up resources in the aggressor cells for their own user equipments, or for other victim cells.

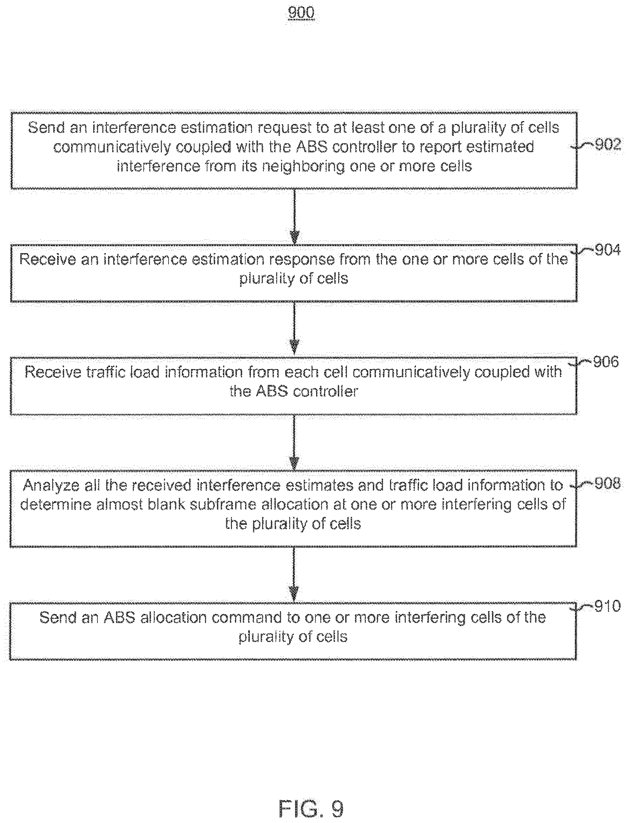

FIG. 9 is a flowchart illustrating an exemplary operation of an ABS allocation controller in a centralized ABS allocation scheme. In some embodiments, the ABS controller is located on a cell, a base station or in the network gateway. In this exemplary operation, the ABS allocation controller sends (902) an interference estimation request to at least one of a plurality of cells communicatively coupled with the ABS controller to report estimated interference from its neighboring one or more cells. In some embodiments, the interference estimation request comprises the cell ID of the cell receiving the request, the measurement time interval of interference estimation and a value representing the reporting period. In some embodiments, the interference estimation request is performed either periodically or on-demand.

The ABS allocation controller then receives (904) an interference estimation response from the one or more cells of the plurality of cells. In some embodiments, the interference estimation response comprises the cell ID of the reporting cell, and a list of at least one neighboring cell ID and a corresponding value of estimated interference from that neighboring cell. In some embodiments, the value of estimated interference can be one of the set [<-10, -10, -8, -6, -4, -2, 0, 2, 4, 6, 8, 10, >10] (dB). The ABS allocation controller also receives (906) traffic load information from each cell communicatively coupled with the ABS controller. The ABS allocation controller analyzes (908) all the received interference estimates and traffic load information to determine almost blank subframe allocation at one or more interfering cells of the plurality of cells. The ABS allocation controller then sends (910) an ABS allocation command to one or more interfering cells of the plurality of cells. In some embodiments, the ABS allocation command comprises the cell ID of the cell receiving the command and ABS pattern information.

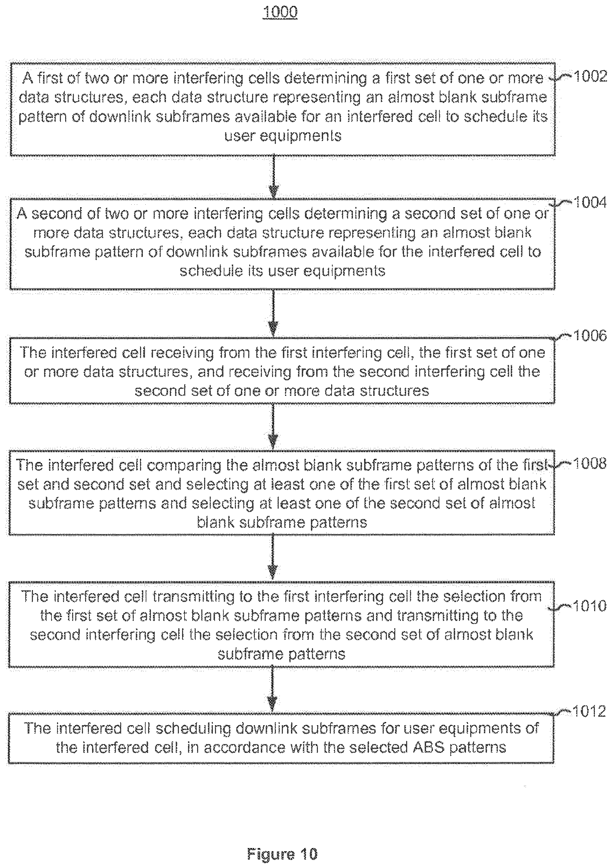

FIG. 10 is a flowchart illustrating one exemplary operation of ABS allocation in a distributed ABS allocation scheme with interfered cells and interfering cells. In some embodiments, the interfered and interfering cells are each of the set of macro cells, pico cells and femto cells. In this exemplary method, in some embodiments, an interfered cell receives information from one or more user equipments reporting interference from at least two other cells. In response to receiving the interference reports, the interfered cell transmits to the two or more interfering cells that there is interference being experienced by user equipments of the interfered cell. In some embodiments the interference being experienced by one or more user equipments of a cell must exceed a predefined threshold before the cell qualifies as an interfered cell in the distributed ABS allocation scheme. In some embodiments the interfering cells in a distributed ABS allocation scheme know the load information of neighboring victim cells.

A first of the two or more interfering cells determines (1002) a first set of one or more data structures, each representing an almost blank subframe pattern of downlink subframes available for the interfered cell to schedule its user equipments, based on the interference information reported by the interfered cell. A second of the two or more interfering cells determines (1004) a second set of one or more data structures, each representing an almost blank subframe pattern of downlink subframes available for the interfered cell to schedule its user equipments, based on the interference information reported by the interfered cell. In some embodiments, an interfering cell determining a set of one or more almost blank subframe patterns of downlink subframes available for the interfered cell to use for its user equipments, further comprises determining one or more almost blank subframe patterns based on the amount of traffic being experienced at the respective interfering cell and requests for almost blank subframe patterns from other interfered cells.

The interfered cell receives (1006) from the first interfering cell, the first set of one or more data structures, and receives from the second interfering cell the second set of one or more data structures. The interfered cell compares (1008) the almost blank subframe patterns of the first set and second set and selects at least one of the first set of almost blank subframe patterns and selects at least one of the second set of almost blank subframe patterns. In some embodiments, comparing the almost blank subframe patterns of the first set and second set, further comprises determining one or more combinations of first set and second set almost blank subframe patterns, and determining one of the patterns of the first set and determining one of the patterns of the second set that results in the minimum possible interference at the interfered cell.

In some embodiments, comparing the almost blank subframe patterns of the first set and second set, further comprises determining a plurality of combinations of first set and second set almost blank subframe patterns, ranking the combinations of first set and second set almost blank subframe patterns on the basis of interference, determining the most to least preferred of the patterns of the first set and determining the most to least preferred of the patterns of the second set based on the ranking of combinations, and adding a value representing the preference of the first interfered cell to the data structure of at least one almost blank subframe pattern of the first set and adding a value representing the preference of the first interfered cell to the data structure of at least one almost blank subframe pattern of the second set.

The interfered cell transmits (1010) to the first interfering cell the selection from the first set of almost blank subframe patterns and transmits to the second interfering cell the selection from the second set of almost blank subframe patterns. In some embodiments, in response to receiving from the interfered cell the selection from the set of almost blank subframe patterns, the interfering cell adopts one of the selected almost blank subframe patterns and transmits information to the interfered cell indicating the almost blank subframe pattern adopted by the first interfering cell. In some embodiments, the interfered cell determines a third pattern of downlink subframes, wherein the third pattern of downlink subframes represents the overlapping almost blank subframes from the almost blank subframe pattern adopted by the first interfering cell and the almost blank subframe pattern adopted by the second interfering cell. Then the interfered cell transmits the third pattern to the first interfering cell and the second interfering cell. The interfered cell schedules (1012) downlink subframes for user equipments of the interfered cell, in accordance with the selected ABS patterns.

In some embodiments, the interfered cell determines a third pattern of downlink subframes, wherein the third pattern of downlink subframes represents the pattern of actual scheduling of the user equipments of the interfered cell. Then, the interfered cell transmits the third pattern to the first interfering cell and the second interfering cell.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific examples of the embodiments disclosed and that modifications and other embodiments are intended to be included within the scope of the appended claims. Although specific terms are employed herein, they are used in a generic and descriptive sense only and not for purposes of limitation.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A time-domain based method of managing communication interference in a heterogeneous network comprising: a first of two or more interfering cells determining a first set of one or more data structures, each data structure representing an almost blank subframe pattern of downlink subframes available for an interfered cell to schedule its user equipments; a second of the two or more interfering cells determining a second set of one or more data structures, each data structure representing an almost blank subframe pattern of downlink subframes available for the interfered cell to schedule its user equipments; the interfered cell receiving from the first interfering cell, the first set of one or more data structures, and receiving from the second interfering cell the second set of one or more data structures; the interfered cell comparing the almost blank subframe patterns of the first set and second set and selecting at least one of the first set of almost blank subframe patterns and selecting at least one of the second set of almost blank subframe patterns; the interfered cell transmitting to the first interfering cell the selection from the first set of almost blank subframe patterns and transmitting to the second interfering cell the selection from the second set of almost blank subframe patterns; and the interfered cell scheduling downlink subframes for user equipments of the interfered cell, in accordance with the selected ABS patterns.

2. The method of claim 1, further comprising: the interfered cell determining a third pattern of downlink subframes, wherein the third pattern of downlink subframes represents the pattern of actual scheduling of the user equipments of the interfered cell; and the interfered cell transmitting the third pattern to the first interfering cell and the second interfering cell.

3. The method of any of claims 1 to 2, further comprising: in response to receiving from the interfered cell the selection from the first set of almost blank subframe patterns, the first interfering cell: adopting one of the selected almost blank subframe patterns; transmitting information to the interfered cell indicating the almost blank subframe pattern adopted by the first interfering cell; in response to receiving from the interfered cell the selection from the first set of almost blank subframe patterns, the second interfering cell: adopting one of the selected almost blank subframe patterns; and transmitting information to the interfered cell indicating the almost blank subframe pattern adopted by the second interfering cell.

4. The method of claim 3, wherein the method further comprises: the interfered cell determining a third pattern of downlink subframes, wherein the third pattern of downlink subframes represents the overlapping almost blank subframes from the almost blank subframe pattern adopted by the first interfering cell and the almost blank subframe pattern adopted by the second interfering cell; and the interfered cell transmitting the third pattern to the first interfering cell and the second interfering cell.

5. The method of any of claims 1 to 4, wherein comparing the almost blank subframe patterns of the first set and second set, further comprises: determining one or more combinations of first set and second set almost blank subframe patterns; determining one of the patterns of the first set and determining one of the patterns of the second set that results in the minimum possible interference at the interfered cell.

6. The method of any of claims 1 to 5, wherein the interfered cell comparing the almost blank subframe patterns of the first set and second set, further comprises: determining a plurality of combinations of first set and second set almost blank subframe patterns; ranking the combinations of first set and second set almost blank subframe patterns on the basis of interference; determining the most to least preferred of the patterns of the first set and determining the most to least preferred of the patterns of the second set based on the ranking of combinations; adding a value representing the preference of the first interfered cell to the data structure of at least one almost blank subframe pattern of the first set and adding a value representing the preference of the first interfered cell to the data structure of at least one almost blank subframe pattern of the second set.

7. The method of any of claims 1 to 6, wherein an interfering cell determining a set of one or more almost blank subframe patterns of downlink subframes available for the interfered cell to use for its user equipments, further comprises: determining one or more almost blank subframe patterns based on the amount of traffic being experienced at the respective interfering cell and requests for almost blank subframe patterns from other interfered cells.

8. The method of any of claims 1 to 7, wherein the interfered and interfering cells are each of the set of macro cells, pico cells and femto cells.
